# EUROPEAN PATENT SPECIFICATION

(11) **EP 4 061 997 B1**
(45) Date of publication and mention of the grant of the patent: **31.12.2025**
(21) Application number: 20816544.9
(22) Date of filing: 13.11.2020
(51) Int. Cl.: D21C 3/02, D21C 9/00, D21H 13/08, D21H 17/07

(54) **METHOD FOR PRODUCING CELLULOSE CARBAMATE**
VERFAHREN ZUR HERSTELLUNG VON CELLULOSECARBAMAT
PROCÉDÉ DE PRODUCTION DE CARBAMATE DE CELLULOSE

(30) Priority: 20.11.2019 FI 20195993
(43) Date of publication of application: 28.09.2022
(73) Proprietor: Andritz Oy, 00180 Helsinki (FI)
(72) Inventor: RÅMARK, Hannu, 48601 Kotka (FI); VALTA, Kyösti, 33230 Tampere (FI); VANHATALO, Kari, 48601 Kotka (FI)
(74) Representative: Espatent Oy
(86) International application number: PCT/FI2020/050749
(87) International publication number: WO 2021/099679

(56) References cited:
- EP-A1- 2 617 708
- EP-A2- 0 057 105
- EP-A2- 3 321 251
- WO-A1-03/099872
- WO-A1-2015/198218
- DE-A1- 19 835 688
- KOOHESTANIAN ESMAEIL ET AL: "A novel process for CO2capture from the flue gases to produce urea and ammonia", ENERGY, ELSEVIER, AMSTERDAM, NL, vol. 144, 16 December 2017 (2017-12-16), pages 279 - 285, XP085345197, ISSN: 0360-5442, DOI: 10.1016/J.ENERGY.2017.12.034

## Description

### Field of the invention

The present invention relates to a method for producing cellulose carbamate (CCA) which can be further processed into regenerated cellulose products, such as fibers, films, or sponges, etc. More specifically, the present invention relates to an overall process for producing CCA from dissolving pulp (DP) and/or kraft pulp in a way that chemical pulp mill systems, steam, water, electricity, flue gas, wastewater treatment, and side streams of CCA production are utilized to improve the overall efficiency of whole process, and discharges of nitrogen compounds in the production of CCA are controlled.

### Background of the invention

Cellulose carbamate (CCA) is an alkali-soluble cellulose derivative invented over 80 years ago. Due to alkali solubility properties, it is a good raw material for regenerated cellulose products.

CCA is manufactured by reacting cellulose with urea or urea radical at elevated temperatures. Typically, urea is used, and it reacts with cellulose according to reaction equations (1) and (2). In the carbamation reaction, urea starts to decompose when the temperature exceeds 133°C, and the intermediate products isocyanic acid and ammonia are formed, reaction equation (1). Isocyanic acid reacts further with OH-groups of cellulose by forming a carbamate group to the cellulose backbone (2).

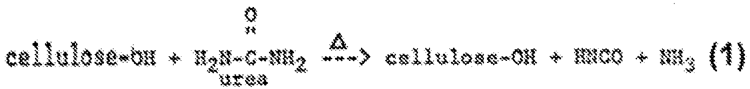

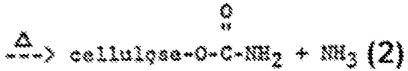

Ammonia gas, which is formed during cellulose carbamation, needs to be removed to prevent saturation of the product side of the reaction equation and to prevent the stopping of carbamation.

Due to elevated temperature, the water is evaporated and the CCA thus formed is physically in solid form. It is a stable material which can be stored and transported. These properties make it an industrially viable product.

CCA can be manufactured from all types of chemical pulps, such as kraft pulp, pre-hydrolysis kraft pulp, soda-AQ pulp, sulfite pulp, neutral sulfite pulp, acid sulfite pulp or organosolv pulp. Common features in existing carbamate techniques are starting from dissolving pulp and pretreating of said pulp in order to activate it to reduce the DPₒ (degree of polymerization). Usually the lowering of DPₒ is done by mercerizing, by hydrolyzing with acidic or alkaline agent, by enzymes, by radiation, by catalysts and/or by mechanical means, such as milling.

US 2,134,825 discloses a process in which cellulose and urea are reacted at an elevated temperature to form an alkali-soluble product. US4404369 (FI 62318) discloses a method where an ammonia solution having urea dissolved therein is utilized and cellulose and urea are reacted at elevated temperatures to form an alkali-soluble product. WO03099872 discloses a process where cellulose is first activated with a mixture of urea and alkali, after which the liquid is pressed and the carbamation reaction is done at elevated temperatures by utilizing reactive extrusion equipment to form an alkali-soluble product. WO2003064476 discloses a CCA production method where high process consistency and processing equipment are utilized, cellulose is pre-ground before mixing it with urea and a small amount of peroxide, and the mixture is reacted at elevated temperatures to form an alkali-soluble product. DE4443547 discloses a process for the preparation of cellulose carbamate by first hydrolyzing cellulose with hydrochloride acid in order to activate it before the carbamation reaction, after which it is reacted with urea at elevated temperatures to form an alkali-soluble product.

Dissolving pulp differs from the pulp intended for paper production. The production of dissolving pulp strives to create pulp with the highest possible cellulose concentration and the lowest possible concentration of hemicellulose, such as xylan, while striving to remove lignin from bleached paper pulp during the cooking and bleaching in such a way that as much cellulose and hemicellulose as possible remains in the paper pulp. In addition to the main component, cellulose - which is described as α-cellulose - paper pulp can contain up to 25% of hemicellulose, while dissolving pulp typically contains over 90% of α-cellulose, and the amount of hemicellulose must be about under 5%.

The low hemicellulose concentration of dissolving pulp is typically sought by treating chips and/or pulp under strongly alkaline and acidic conditions. Dissolving pulp has conventionally been made either with a sulfite process or with a sulfate process equipped with acid prehydrolysis. If the sulfate process is used in the production of dissolving pulp, before alkaline cooking, wood chips are typically subjected to prehydrolysis, where a significant amount of hemicellulose is removed under acidic conditions before the alkaline cooking. At the end of the fiberline, pulp is processed in bleaching stages similar to paper pulp, where the most important difference is the alkaline bleaching stages, which are carried out out at higher temperatures than in maximum yield-preserving bleaching. Furthermore, in order to produce viscose pulp, both sulfate cooking and sulfite cooking have typically cooked to a lower kappa than in paper pulp production.

It is also known that in dissolving pulp production caustic extraction may be carried out after an acidic cooking process, or the chips are subjected an acid prehydrolysis stage at a high temperature and pressure before alkaline cooking. One preferred method for producing dissolving pulp is described in WO publication 2019170962.

A chemical pulp mill is a closed process system where there exists a balance of certain elements, sodium and sulfur. Some inorganic elements, such as chlorine and potassium, enter process cycles with wood raw materials. They are removed when fly ash is taken away from the process balance. Due to the closed cycle, it is important to prevent or minimize the presence of non-process elements or totally new elements in pulp mill process cycles. Urea is needed when CCA is produced, and thus nitrogen is a new input to the process balance, and thus the amount of nitrogen needs to be minimized.

A major share of 99 million tons (62%) of the global fiber market is based on non-renewable and non-biodegradable feedstock, known as synthetic textile fibers; 24.3% on cotton, which is non-ecological; and 6.6% on viscose, which is produced by using the hazardous chemical CS2 (carbon disulfide).

Viscose is the most commonly used method of producing cellulose-based regenerated fibers, and the viscose process that uses CS2 accounts for over 90% of the total volume of regenerated fibers. There are other methods that are used for products, such as Lyocell, produced with ionic liquids, which are more environmentally friendly but remain niche products due to their costs and chemical recovery challenges.

CCA is an interesting alternative from current viscose fiber producers' point of view due to minor changes in a viscose mill when moving to a carbamate process. The biggest advantage is that the CS₂ chemical, which is harmful and toxic, is not used anymore, and thus the occupational health issues are much less crucial. The spinning system may be fully open, having no harmful and toxic CS₂ gas emissions. Another big advantage is the higher spinning production capacity with current spinning equipment due to fast precipitation speed compared to viscose coagulation speed.

In view of the known processes, there is a need to develop an overall process concept, including a chemical pulp mill and a CCA manufacturing process for producing CCA to be used as a raw material for regenerated cellulose products. There is a particular need to provide an environmentally friendly arrangement for controlling harmful emissions and one new element in the process balance of a chemical pulp mill environment, nitrogen.

### Description of invention

It has surprisingly found that by integrating the cellulose carbamate production into a chemical pulp mill where dissolving pulp and/or Kraft pulp is produced, the benefits are greater from a technical and economical point of view when compared to any known solutions. The solution of the present invention is as defined in the appended claims.

In this application, the production of CCA is integrated into a chemical pulp mill where dissolving pulp and/or Kraft pulp is produced, in a such way that at least a portion of the chemicals used in the cellulose activation are produced by an integrated chemical recovery process of the pulp mill and discharges of nitrogen compounds in the production of CCA are controlled.

The CCA plant that produces CCA from dissolving pulp (DP) and/or kraft pulp with urea at an elevated temperature can be a process department at a chemical pulp mill. DP and/or kraft pulp is produced at the chemical pulp mill to be used in the CCA plant. Dissolving pulp and kraft pulp may be produced with the methods known in the art. The method typically comprises a pretreatment of cellulosic material, such as wood chips, cooking and bleaching.

The chemical pulp mill produces bleached fibrous cellulosic material. The fibrous cellulosic material may be derived from wood plant material, such as softwoods or hardwoods. It is also possible to use fibrous cellulosic material obtained from non-wood lignocellulosic plant materials such as cotton, grass, bagasse, straws of grain crops, flax, hemp, sisal, abaca or bamboo.

The CCA plant, which produces CCA by reacting DP or kraft pulp with urea at an elevated temperature, can work with any known method which produces cellulose carbamate, but it is advantageous to use a method which does not use organic solvents or other chemicals foreign to the chemical pulp mill environment. CCA production methods that only use urea, or urea and sodium hydroxide and/or peroxide are the most suitable, because all the chemical residues or by-products can be utilized in the chemical pulp mill.

A required pre-treatment for the manufacturing of cellulose carbamate is the activation of the cellulose of dissolving pulp or kraft pulp. In the activation the degree of polymerization (DPₒ) is decreased. This can be carried out at a suitable stage of a chemical pulp mill fiberline, and/or at a separate stage between the chemical pulp mill fiberline and the CCA plant, and/or in the CCA plant. The activation, i.e. the decrease of the DPₒ, can be performed according to different methods, which are suitable in the process environment of the chemical pulp mill. The activation may be carried out after the cooking or in connection with the bleaching at the chemical pulp mill. Advantageous activation methods are typically acid hydrolysis, alkali hydrolysis (merceration), ozone stage, peroxide treatment and peroxide addition in an oxygen stage.

A chemical pulp mill provides a CCA plant with process utilities, such as steam, electricity, and water, which are needed to manufacture cellulose carbamate.

The CCA plant can create waste streams from:
- CCA process carbamation reaction (ammonia)
- CCA process washing if washing of the product is needed (unreacted urea and by-products of carbamation)

The present invention provides a method for the production of cellulose carbamate (CCA) from DP and/or kraft pulp and controlling discharges of nitrogen compounds in the production of cellulose carbamate, in which method dissolving pulp (DP) and/ or kraft pulp is produced at a chemical pulp mill, and the dissolving pulp and/or the kraft pulp are activated at the mill, at the CCA plant or between them. The activated DP or kraft pulp is reacted with urea to produce cellulose carbamate whereby ammonia is released. The cellulose carbamate production is integrated into the pulp mill having a flue gas system such that carbon dioxide from the flue gases is reacted with released ammonia to produce urea, which is used in the carbamate production.

The activation of dissolving pulp or kraft pulp, i.e. the decrease of DPₒ, is done in the fiberline of the chemical pulp mill or at the CCA plant at the same time when CCA is manufactured. WO2003064476 discloses a process for activating cellulose in the CCA manufacturing process.

The activation of the dissolving pulp or the kraft pulp may be performed according to different methods, such as:
- acid hydrolysis, by using acid streams from the chemical pulp mill, such as sodium bisulfite, or fresh acid produced in a recovery cycle , e.g. H2SO4 from sulfur-containing flue gases
- alkali hydrolysis i.e. merceration, by using alkali streams from the chemical pulp mill
- ozone treatment and adjustment of the pulp pH, preferably with acid or alkali stream from the chemical pulp mill, or
- peroxide treatment in an O2-stage or at the CCA plant.

Ammonia gas formed in the cellulose carbamation reaction is converted back to urea, to be used again in carbamation to minimize the CCA process chemical input, by using CO₂, equations (3) and (4). A CO₂ stream can be taken from the chemical pulp mill flue-gas system, especially from the lime kiln, and led to a CCA plant carbamation reactor, or to a separate process where urea is manufactured and reused in the CCA process.

2NH₃ + CO₂ ⇆ NH₂COONH₄ (3)

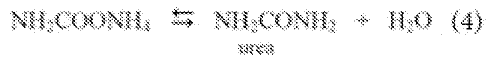

Urea is produced by the reaction between ammonia and carbon dioxide (CO₂). This is a two-step process, where the ammonia and carbon dioxide react to form ammonium carbamate, which is then dehydrated to urea. In the urea production process, ammonia and CO₂ are introduced in gaseous form. Both components are liquefied in a high-pressure condenser and led to a high-pressure reactor, where ammonium carbamate is formed at an elevated temperature, e.g. 180-190°C, reaction equation (5). This reaction is fast and exothermic.

An advantageous source of carbon dioxide is flue gases from a lime kiln, in which lime mud (CaCO₃) is burnt to lime (CaO). The partial pressure of CO₂ of lime kiln flue gases is higher than that of the flue gases of boilers, such as recovery boilers and power boilers, at the pulp mill, because the lime kiln flue gas includes CO₂ from the combustion of fuel and also CO₂ from the calcination reaction.

The nitrogen balance can be further controlled by using additional methods, if needed. Waste streams containing nitrogen compounds, such as unreacted urea, ammonia formed in carbamation reaction, thiourea or other by-products from the carbamation reaction, can be led fully or partly to a chemical pulp mill wastewater treatment plant, where they act as a nutrient source for micro-organisms, or to an anaerobic digestion system where biogas is produced. Another option is to lead nitrogen-containing waste streams fully or partly to an evaporation plant to produce dry fertilizers. With this process set-up, the amount of urea input to the CCA process can be minimized by utilizing unreacted residues.

Alkaline waste streams from the CCA plant, such as wastewater or ammonia gas, can be processed to the chemical pulp mill and used there to neutralize
- acidic hydrolysate from the dissolving pulp production (prehydrolysate),
- acidic washing filtrates from bleaching washers,
- acidic condensates from the evaporation plant, or
- other acidic process streams.

These neutralized waste streams containing nitrogen can be further led to a chemical pulp mill wastewater treatment plant, where they act as a nutrient source for micro-organisms, or to anaerobic digestion to produce biogas.

Ammonia gas formed (reaction equation (1)) in a cellulose carbamation reaction can be utilized in the pulp mill flue-gas systems to minimize NOx emission, reaction equation (5) and (6). Ammonia can be in gaseous form or in dissolved solution form when utilized.

4 NO + 4 NH₂ + O₂ → 4 N₂ + 6 H₂O (5)

6 NO₂ + 8 NH₃ → 7 N₂ + 12 H₂O (6)

Carbon dioxide emissions are believed to be a major contributor to global warming. Consequently, it is advantageous to capture CO₂ from flue gases of the pulp mill and utilize it as feedstock for urea.

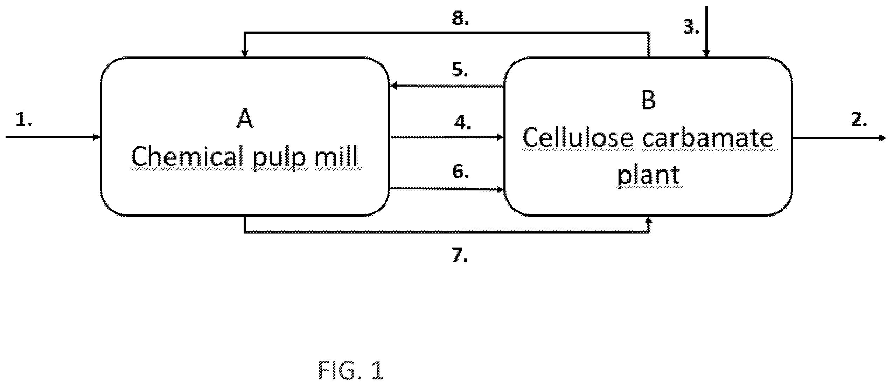

**Figure 1** is a schematic illustration of CCA production by integrating it into a chemical pulp mill where dissolving pulp or kraft pulp is produced.

The numbers and letters in FIG. 1 refer to the following streams and processing stages:
A. Chemical pulp mill
B. Cellulose carbamate (CCA) plant
   1. Raw materials, chemical and process utilities needed to produce pulp
   2. Cellulose carbamate
   3. Urea
   4. Dissolving pulp or kraft pulp
   5. Slightly alkaline nitrogen-containing filtrate from CCA plant to neutralization, or to a wastewater treatment plant, or to an anaerobic digestion plant to biogas production at the pulp mill
   6. Steam, water, electricity, and CO₂ (urea recovery) from the pulp mill to the CCA production
   7. Acidic or alkaline activation agent if the activation is done at the CCA plant
   8. Ammonia to flue-gas systems to reduce NOx-emissions

Raw material, such as wood chips, and chemicals, typically cooking chemicals, as well as process utilities are introduced (line 1) to a chemical pulp mill A, where dissolving pulp or kraft pulp is produced in a way known per se.

Dissolving pulp (DP) or kraft pulp is produced (line 4) at the chemical pulp mill in a way known per se. It is activated in the chemical pulp mill fiberline or at the CCA plant B.

A plant for a cellulose carbamate (CCA) production is integrated into the chemical pulp mill (line 6). CCA is produced by reacting
a) activated DP or activated kraft pulp with urea at an elevated temperature. The dry matter content of DP or kraft pulp is about 40-90 %, and it is mixed efficiently with urea (from line 3), or
b) DP or kraft pulp with urea (line 3) and with an activation agent (line 7) at an elevated temperature so that the activation of DP or kraft pulp is performed at the same time than CCA is produced. The dry matter content of DP or kraft pulp is about 40-90 %, and it is mixed efficiently with urea (from line 3) and with activation agent (line 7).

Then the final carbamation reaction is made in a steam-heated mixing reactor at a temperature of 130-160 °C. Ammonia is generated in the reaction. A small portion of the urea may not react, and it may be removed from the CCA product by washing. The CCA product is cooled, washed and dried, and then it is led to further processing (line 2).

Ammonia released from the carbamation process is scrubbed out of the reactor with steam and used to produce urea, which is recycled to the carbamation process. The amount of the urea supplied from an external source through line 3 can be decreased by producing urea internally. This is carried out by reacting ammonia with the carbon dioxide of flue gases from the pulp mill. An advantageous source for carbon dioxide is flue gases from a lime kiln, in which lime mud (CaCO₃) is burnt to lime (CaO). The urea regeneration plant is preferably part of the CCA plant.

Carbon dioxide is preferably captured from the flue gases. This can be performed by using conventional well-known methods, such as the monoethanolamine (MEA) absorption process and pressure swing adsorption (PSA) process.

The urea production is a two-step process where the ammonia and carbon dioxide react to form ammonium carbamate, which is then dehydrated to urea. Ammonia and CO₂ are introduced in gaseous form. Both components are liquefied in a high-pressure condenser and led to a high-pressure reactor where ammonium carbamate is formed at an elevated temperature, e.g. 180-190 °C, reaction equation (5). This reaction is fast and exothermic. The second reaction (6) is endothermic and does not go to completion. A solution comprising urea and ammonium carbamate is obtained. The ammonium carbamate present in the solution is decomposed to CO₂ and NH₃ in a recovery unit and recycled to the urea synthesis reactor. The urea process solution is led to the carbamation reactor.

A part of the released ammonia can be utilized also in pulp mill flue gas systems to minimize NOx emissions according to reaction equations (5) and (6). Ammonia can be in gaseous form or in dissolved form when it is led to the pulp mill (line 8).

Slightly alkaline waste streams (line 5) comprising nitrogen compounds, such as unreacted urea, can be led fully or partly to a chemical pulp mill wastewater treatment plant. These waste streams can optionally or alternatively be led to an evaporation plant and produce dry fertilizers or to be led to biogas production or to be used as neutralizing agent to neutralize
- acidic hydrolysate from the dissolving pulp production (prehydrolysate),
- acidic washing filtrates from bleaching washers,
- acidic condensates from NCG gas condensation systems of the pulp mill evaporation plant, or
- other acidic process streams.

These neutralized waste streams containing nitrogen can be further led to a chemical pulp mill wastewater treatment plant, where they act as a nutrient source for micro-organisms, or to anaerobic digestion to produce biogas.

The new method provides an efficient way to utilize available ammonia and carbon dioxide and thus control their emissions from the integrated CCA plant and pulp mill. The raw material, dissolving pulp or kraft pulp, is activated in the fiberline or at the CCA plant preferable by using chemicals produced by the pulp mill.

## Claims

1. A method for controlling discharges of nitrogen compounds in the production of cellulose carbamate (CCA), in which method dissolving pulp (DP) and/or kraft pulp is produced from cellulosic fibrous material at a chemical pulp mill, and activated in order to decrease a degree of depolymerization of the pulp, and
the activated DP or activated kraft pulp is reacted with urea to produce cellulose carbamate whereby ammonia is released, and
wherein the cellulose carbamate production is integrated into the pulp mill having a flue gas system such that carbon dioxide from the flue gases is reacted with released ammonia to produce urea, which is used in the carbamate production.

2. A method according to claim 1, wherein carbon dioxide is obtained from the flue gases of a lime kiln.

3. A method according to claim 1, wherein released ammonia or ammonia-containing wastewater from the carbamate production are used to neutralize prehydrolysate from DP production and/or acidic wastewater from the pulp mill.

4. A method according to claim 1 or 2, wherein at least a portion of the nitrogen-containing wastewater from the CCA production is led to an evaporation plant and concentrated to produce dry nitrogen fertilizers.

5. A method according to claim 1 or 2, wherein nitrogen-containing wastewater from the CCA production are conveyed to a wastewater treatment plant of the pulp mill to be used as nutrient.

6. A method according to any one of claims 1-5, wherein the activation is carried out at a fiberline of the chemical pulp mill, and/or at a separate stage between the chemical pulp mill and the CCA plant, and/or in the CCA plant.

7. A method according to any one of claims 1-6, wherein the activation method is at least one of the following: acid hydrolysis, alkali hydrolysis (merceration), ozone stage, peroxide treatment and peroxide addition in an oxygen stage.

8. A method according to any one of claims 1-7, wherein the activation is carried out by using chemicals produced or formed at the pulp mill.

## Patentansprüche

1. Verfahren zur Kontrolle der Austräge von Stickstoffverbindungen bei der Produktion von Cellulosecarbamat (CCA), wobei in dem Verfahren Chemiezellstoff (DP) und/oder Kraftzellstoff aus einem cellulosehaltigen faserigen Material in einem chemischen Zellstoffwerk hergestellt wird und aktiviert wird, um einen Depolymerisationsgrad des Zellstoffs zu vermindern, und
der aktivierte Chemiezellstoff oder aktivierte Kraftzellstoff mit Harnstoff zur Reaktion gebracht wird, um Cellulosecarbamat zu produzieren, wodurch Ammoniak freigesetzt wird, und
wobei die Cellulosecarbamatproduktion in das Zellstoffwerk integriert ist, welches ein Rauchgassystem aufweist, so dass Kohlenstoffdioxid aus den Rauchgasen mit freigesetztem Ammoniak zu Harnstoff umgesetzt wird, der in der Carbamatproduktion verwendet wird.

2. Verfahren nach Anspruch 1, wobei Kohlenstoffdioxid aus den Rauchgasen eines Kalkofens bezogen wird.

3. Verfahren nach Anspruch 1, wobei freigesetztes Ammoniak oder ammoniakhaltiges Abwasser aus der Carbamatproduktion verwendet wird, um das Vorhydrolysat aus der Chemiezellstoffproduktion und/oder saures Abwasser des Zellstoffwerks zu neutralisieren.

4. Verfahren nach Anspruch 1 oder 2, wobei mindestens ein Teil des stickstoffhaltigen Abwassers aus der CCA-Produktion zu einer Eindampfungsanlage geführt und konzentriert wird, um trockenen Stickstoffdünger zu produzieren.

5. Verfahren nach Anspruch 1 oder 2, wobei stickstoffhaltiges Abwasser aus der CCA-Produktion zu einer Abwasserbehandlungsanlage des Zellstoffwerks geleitet wird, um als Nährstoff verwendet zu werden.

6. Verfahren nach einem der Ansprüche 1 bis 5, wobei die Aktivierung an einer Faserlinie des chemischen Zellstoffwerks und/oder in einer separaten Stufe zwischen dem chemischen Zellstoffwerk und der CCA-Anlage und/oder in der CCA-Anlage ausgeführt wird.

7. Verfahren nach einem der Ansprüche 1 bis 6, wobei das Aktivierungsverfahren mindestens eines von Folgendem ist: saure Hydrolyse, alkalische Hydrolyse (Mercerisation), Ozonstufe, Peroxidbehandlung und Peroxidzugabe in einer Sauerstoffstufe.

8. Verfahren nach einem der Ansprüche 1 bis 7, wobei die Aktivierung durch Verwendung von im Zellstoffwerk produzierten oder gebildeten Chemikalien ausgeführt wird.

## Revendications

1. Procédé pour contrôler les rejets de composés azotés dans la production de carbamate de cellulose (CCA), dans lequel une pâte dissolvante (DP) et/ou une pâte kraft est produite à partir d'un matériau fibreux cellulosique dans une usine de pâte chimique, et activée pour réduire le degré de dépolymérisation de la pâte, et
la pâte dissolvante activée ou la pâte kraft activée est mise en réaction avec de l'urée pour produire du carbamate de cellulose, ce qui libère de l'ammoniac, et
dans lequel la production de carbamate de cellulose est intégrée à l'usine de pâte ayant un système de gaz de combustion de sorte que du dioxyde de carbone en provenance des gaz de combustion est mis en réaction avec de l'ammoniac libéré pour produire de l'urée qui est utilisée dans la production du carbamate.

2. Procédé selon la revendication 1, dans lequel le dioxyde de carbone est obtenu dans les gaz de combustion d'un four à chaux.

3. Procédé selon la revendication 1, dans lequel l'ammoniac libéré ou l'effluent contenant de l'ammoniac de la production de carbamate est utilisé pour neutraliser le pré-hydrolysat issu de la production de pâte dissolvante et/ou l'effluent acide sortant de l'usine de pâte.

4. Procédé selon la revendication 1 ou 2, dans lequel au moins une partie de l'effluent azoté provenant de la production de CCA est dirigée vers une station d'évaporation et concentrée pour produire des engrais azotés secs.

5. Procédé selon la revendication 1 ou 2, dans lequel l'effluent azoté provenant de la production de CCA est acheminé vers une station de traitement des effluents de l'usine de pâte pour être utilisé comme nutriment.

6. Procédé selon l'une des revendications 1 à 5, dans lequel l'activation est effectuée sur une ligne des fibres de l'usine de pâte chimique et/ou dans une étape séparée entre l'usine de pâte chimique et l'installation de CCA et/ou dans l'installation de CCA.

7. Procédé selon l'une des revendications 1 à 6, dans lequel le procédé d'activation est au moins l'un parmi : l'hydrolyse acide, l'hydrolyse basique (mercerisation), l'étape d'ozone, le traitement au peroxyde et l'ajout de peroxyde dans une étape d'oxygène.

8. Procédé selon l'une des revendications 1 à 7, dans lequel l'activation est effectuée par l'utilisation de substances chimiques produites ou formées dans l'usine de pâte.
